# EUROPEAN PATENT SPECIFICATION

(11) **EP 1 423 022 B1**
(45) Date of publication and mention of the grant of the patent: **23.05.2007**
(21) Application number: 02758943.1
(22) Date of filing: 06.09.2002
(51) Int. Cl.: A23L 3/32, A23C 3/00, A23C 3/07

(54) **METHOD AND APPARATUS FOR TREATING A FLUID**
VERFAHREN UND VORRICHTUNG ZUR BEHANDLUNG VON FLÜSSIGKEITEN
PROCEDE ET APPAREIL DE TRAITEMENT DE LIQUIDE

(30) Priority: 07.09.2001 NL 1018907
(43) Date of publication of application: 02.06.2004
(73) Proprietor: Nederlandse Organisatie voor Toegepast-Natuurwetenschappelijk Onderzoek TNO, 2628 VK Delft (NL)
(72) Inventor: NOTERMANS, Servatius, Hubertus, Wilhelmus, NL-3723 KA Bilthoven (NL)
(74) Representative: Winckels, Johannes Hubertus F.
(86) International application number: PCT/NL2002/000581
(87) International publication number: WO 2003/028487

(56) References cited:
- EP-A- 0 563 639
- EP-A- 0 689 823
- DE-A- 3 700 450
- FR-A- 2 513 087
- US-A- 4 594 138
- US-A- 4 800 011
- PATENT ABSTRACTS OF JAPAN vol. 2000, no. 13, 5 February 2001 (2001-02-05) -& JP 2000 279145 A (NISSIN ELECTRIC CO LTD), 10 October 2000 (2000-10-10)
- PATENT ABSTRACTS OF JAPAN vol. 2000, no. 01, 31 January 2000 (2000-01-31) -& JP 11 267651 A (TOKAI CARBON CO LTD;KONICA CORP), 5 October 1999 (1999-10-05)
- PATENT ABSTRACTS OF JAPAN vol. 1996, no. 05, 31 May 1996 (1996-05-31) -& JP 08 024867 A (HISAAKI ARITA;OTHERS: 01), 30 January 1996 (1996-01-30)
- PATENT ABSTRACTS OF JAPAN vol. 014, no. 566 (C-0789), 17 December 1990 (1990-12-17) -& JP 02 245290 A (MITSUBISHI HEAVY IND LTD), 1 October 1990 (1990-10-01)

## Description

The invention relates to a method and apparatus for treating a fluid and also to a fluid filter for use in such a method and apparatus. Within the scope of this patent application, a "filter" comprises any object through which a fluid can flow, apart from the question whether this object is used to stop particles from the fluid, or passes all particles.

From an article in Food Research International 29(2), pages 117-121, entitled "Inactivation of Escherichia Coli by combining pH, ionic strength and pulsed electric field hurdles" by H. Vega-Mercado, U.R. Pothakamurt, F.J. Chang, G.V. Barbarossa-Canovas and B.G. Swanson, a method is known for pasteurizing milk with the aid of an electric field. Such a technique is also known from IEEE Transactions on Industry Applications 34, pages 43-50, 1998.

By exposing milk to an electric field having a strength of 2-4 MV/m, the cell membranes of microorganisms present in the milk break open through the agency of the charge carriers present thereon. This leads to deactivation of the microorganisms.

The above article also describes an apparatus in which the milk is exposed to the field. This apparatus is provided with a pipe through which the milk is passed. The pipe wall consists over the major part of the length of a conductive material, which is locally interrupted by a ring of insulating material. The ring separates the conductive material into two parts. Between the parts an electric tension is applied to generate the electric field in the milk.

The employed electric tension is within the range of 20-40 kV. The energy consumption as a result of this voltage is rather high. In order to eliminate the microorganisms, however, short voltage pulses, of the order of a microsecond, will suffice. These must be repeated whenever the treated fluid has flown from the space within the insulating ring. Thus the energy consumption can be limited.

The use of such a high voltage and short pulses, however, makes the apparatus expensive and impractical for use on a large scale.

It is inter alia an object of the invention to provide a method and an apparatus in which fluids can be exposed to high electric fields without high voltages being necessary.

The invention provides a method for treating a fluid, which comprises passing the fluid through pores in a membrane having surfaces connected by the pores, on which conductive layers are arranged, which are interrupted at the pores, the membrane containing a material that electrically insulates the conductive layers practically from each other, in which method a voltage is applied between the two layers. According to the invention, the fluid, for instance milk, is exposed to an electric field in the pores of an insulating membrane.

The electric field is generated by means of voltage on conductive layers on opposite surfaces of the membrane. The membrane preferably consists of insulating material, but any material that admits a voltage drop between the conductive layers is useful. The pores connect the two surfaces, and the layers are interrupted at the pores, so that the fluid can flow through the pores. It is possible to generate a high electric field strength with a relatively low voltage between the layers, because a thin membrane having a large amount of small pores is possible, which together pass sufficient fluid flow.

Although the method can be used specifically for pasteurizing milk, the method is applicable to treatment of all kinds of bulk fluids, for instance for disinfecting liquid foods, water purification or for the extraction of the cell content of biomass, for instance for the extraction of juice from plant cells et cetera, in which the cell wall of biological cells must be perforated.

As voltage an alternating voltage is preferably used. Thus disintegrating effects are inhibited in the fluid, and the membrane is prevented from clogging as a result of charge effects. In principle, however, direct current voltage is also useful.

The invention also relates to an apparatus with two chambers and such a membrane between them. In one embodiment of the apparatus according to the invention, there is used a packet of such membranes through which the fluid is successively passed. After passage through each membrane the fraction of cells that are not broken open will fall by a factor. Thus a very high effectiveness can be obtained. Preferably, the same voltage is applied across each membrane. Thus one voltage source will suffice. The polarity with which the voltages are applied between the different layers makes no difference to the effectiveness. Preferably, the polarity is selected such that the layers on the outside of the packet have the same potential, corresponding to that of the rest of the apparatus (earth).

In a further embodiment, such a series of membranes is obtained by means of a sandwich construction of alternately non-insulating membranes and conductive layers. Thus each conductive layer between a pair of membranes serves as a pole for applying voltage across two membranes, on both sides of the layer. In this embodiment, the polarity of the voltage in successive layers interchanges. Thus one voltage source will suffice for the sandwich.

The invention also relates to a fluid filter with a membrane for use in the method or apparatus according to the invention.

These and other objectives and advantageous aspects of the method and apparatus according to the invention will be described in more detail with reference to the following figures.
Figure 1 shows an apparatus for treating a fluid.
Figure 2 shows a membrane element.
Figure 3 shows a top view of a membrane element.
Figure 4 shows a cross-section of a detail of a membrane element.
Figure 5 shows a packet of membranes.

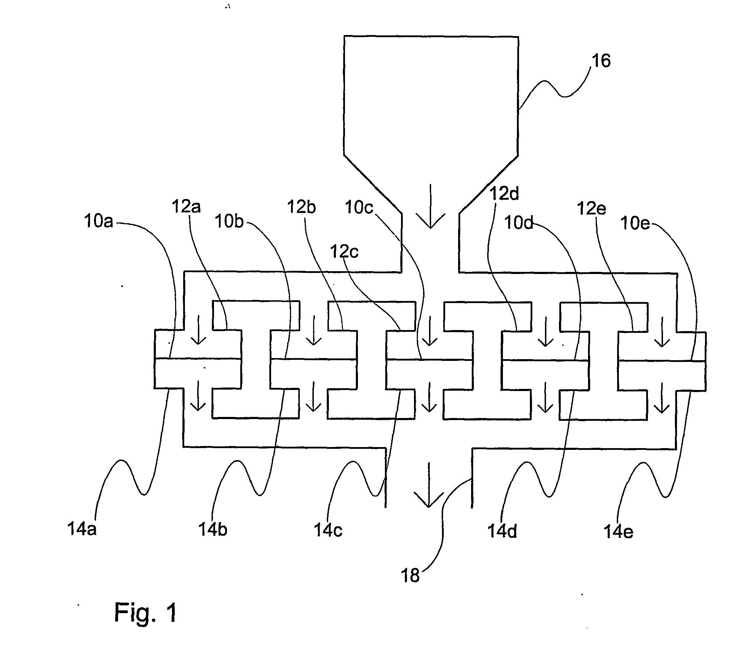

Figure 1 diagrammatically shows an embodiment of an apparatus for treating a fluid. The apparatus is provided with an inlet 16 and an outlet 18 for fluid, first chambers 12a-e, second chambers 14a-e and membrane elements 10a-e. Filter units, which each contain one of the first chambers 12a-e and one of the second chambers 14a-e separated by one of the membrane elements 10a-e, are inserted parallel to each other between the inlet 16 and the outlet 18. The number of chambers 12a-e depends on the desired processing capacity. If necessary, one chamber will suffice. Optionally, the membrane elements 10a-e are arranged on carriers (not shown) to increase their firmness. In operation, a fluid to be treated flows from the inlet 16 to the outlet 18 via successively one of the first chambers 12a-e, a membrane element 10a-e and one of the second chambers 14a-e.

Figure 1 only shows an illustrative embodiment of the invention. Each arrangement of fluid channels with membrane units therein having any shape (not necessarily flat and not necessarily having a fixed time-independent shape) can be used.

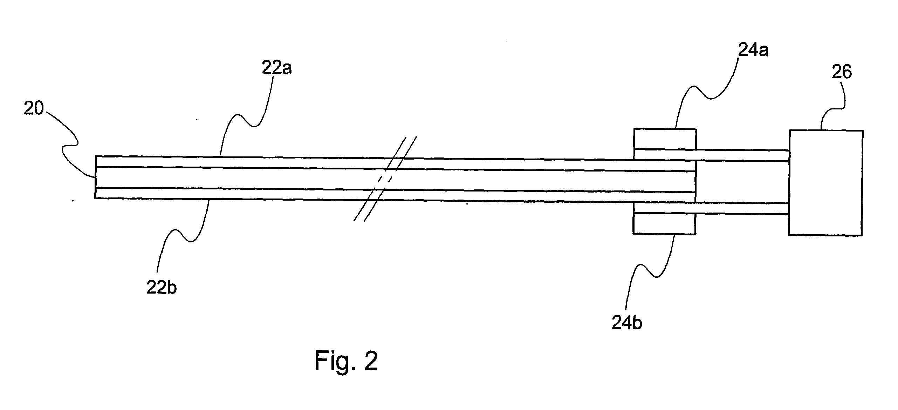

Figure 2 shows a side view of a membrane element (not to scale). The element contains a membrane 20 with electrically conductive layers 22a-b thereon and, on the layers, connections 24a-b to a voltage source 26. The voltage source is used to apply a voltage within the range of 10-20 Volts between the layers 22a,b. The membrane is for instance about 20 micrometers in thickness and has a diameter of a number of centimeters. The circumference of the membrane may have any desired shape, for instance round, square, et cetera. The membrane contains small pores (not shown in Figure 2) having a diameter of the order of 10-20 micrometers. Although in Figure 2 the metal layers 22a are thinner than the membrane 20, thicker metal layers may be used in practice.

The invention is of course not limited to flat membrane elements, as shown in Figure 1. In general, the surface of the membrane can be given any three-dimensional shape desired for insertion in a fluid flow. Even time-dependent shapes are possible. The membrane elements may for instance also be cylindrical, so that a membrane forms a separation between a cylindrical inner space and an outer space, with the layers 22a,b on respectively the inner and the outer side of the cylinder. By pressing the fluid into the cylinder, it is forced to flow out of the cylinder through the pores.

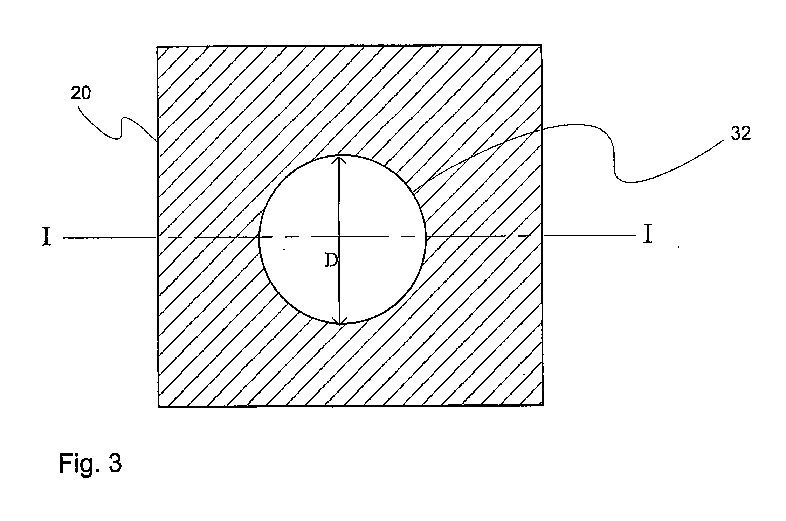

Figure 3 shows a top view of a detail of the membrane 20. In the membrane 20 a pore 32 is visible. The diameter D of the pore 32 is indicated. The diameter of the membrane 30 is much larger, many times larger than the diameter of the pore 32, typically at least of the order of centimeters. The membrane comprises a large number of pores, such as pore 32.

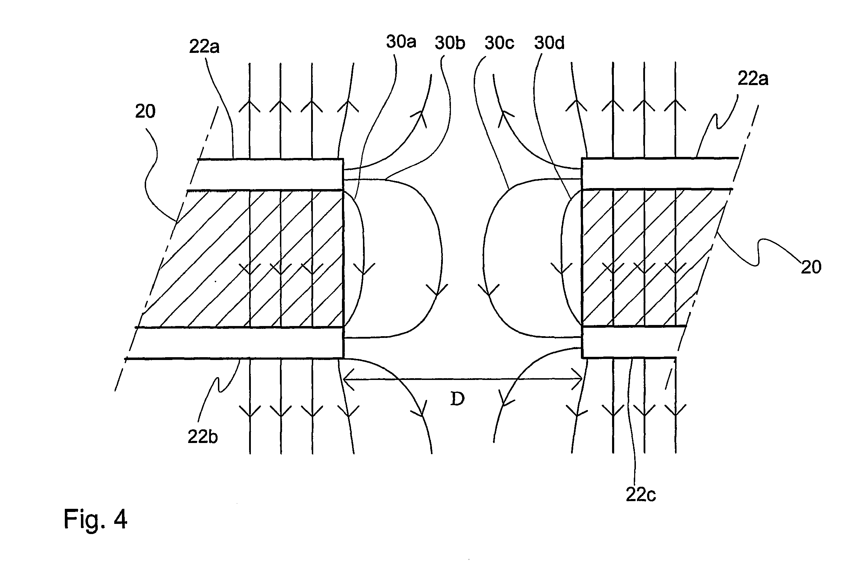

Figure 4 shows a cross-section of the membrane 20 and the conductive layers 22a,b in side view along the line I-I of Figure 3. The cross-section runs through a pore 32. At the pore the membrane 20 and the layers 22a are interrupted so that a fluid flow is possible through the membrane (from the top to the bottom in Figure 3). The voltage that in use is present between the layers 22a,b provides an electric field in the membrane 20 and the pore 32.

Some field lines 30a-d of this electric field are indicated in Figure 4. In the membrane 20 the field lines run practically straight from the first layer 22a to the second layer 22b. In the pore, field lines 20a-d run in curves from the edge of the first layer to the edge of the second layer. In general, the field strength will decrease according as the distance to the edge between the pore and the conductive layers 22a,b increases, but as long as the radius of the pore is of the same order or smaller than the thickness of the membrane 20 this decrease is not strong, and therefore about the same field strength will prevail in the pore as in the membrane 20, that is to say a field strength of about the voltage between the conductive layers 22a-b divided by the thickness of the membrane. At a voltage of 20 Volts and a membrane of 10 micrometers in thickness this is therefore a voltage of about 2 MV/m.

Thus it is possible with a relatively low voltage to generate sufficient field strength in the fluid that flows through the pores 32 in the membrane to perforate cell walls of cells in the fluid. This simplifies the apparatus for treating a fluid considerably in comparison with a high-voltage installation. Through the small thickness of the membrane it is possible to renew the fluid in the membrane almost immediately. Thus even at a voltage continuously present there hardly occurs energy dissipation, while the pore is filled with "treated" fluid, which is not combined with perforation of cell walls. This renders an efficient treatment possible without complicating pulse techniques.

The diameter of the pores is selected on the basis of the largest particles that occur in the fluids to be treated. Thus these particles can pass these pores. The cross-section of the pores need not necessarily be circular. Any shape is useful. The thickness of the membrane 20 is preferably not smaller than the radius of the pores (or, more in particular for non-circular pores, than the distance from one of the conductors 22a,b to any point in the pore in the plane of the respective conductor) or at least a small factor of for instance at most 5 times that radius or distance. Thus sufficient field strength is left across the whole pore.

Although in Figure 2 the pore runs straight on, it will be clear that pores that rather coil from one side of the membrane to the other are also useful. In fact, it will suffice that the field lines run through the pores.

Preferably, there is used an alternating voltage between the conductors 22a,b, at a frequency that is preferably at least so high that, at the employed flow rate of the fluid through the pores, fluid particles cannot flow through the pore from one side of the membrane to the other within a small part of the period of the alternating voltage (for instance less than a quarter of a period). Preferably, the frequency is so high that the fluid particles will take at least one whole period to flow through the pore. Thus disintegration of the fluid is inhibited, and clogging as a result of charge effects is prevented.

The manner in which the element with the conductive layers 22a,b and the membrane 20 with the pores therein is made is not essential to the invention. In one embodiment, there is started from a membrane of plastic foil, but a ceramic material et cetera could also be used. Subsequently, the conductors are arranged on the membrane (for instance by sticking metal foil thereon, or by evaporating, arranging a metallic paint by sputtering et cetera). The technique by which the metal layer is applied is not essential either. Preferably, there is used a rather thin metal layer, but the desired field may also be generated with thicker metal layers.

With laser technology holes are burned through the packet of the conductors layers 22a,b and the membrane 20. By locally heating the metal layers and the membrane with a focused laser beam, there can thus be made pores running through the metal layers and the membrane and having a diameter adjustable up to the micron. Of course, without departing from the invention, another membrane, another manner of arranging the conductive layers and/or another manner of arranging pores can be used, Thus, for instance, there can be used etching through apertures in a photolithographic layer to make the pores.

Essential to the selection of the material of the membrane 20 is only that this admits the existence of an electric field between the conductors conductors 22a,b. Preferably, an insulating material is used, but also a hardly conductive material will be satisfactory, on condition that at the employed voltages a significant part of the voltage drop between the two conductive layers remains present. Less insulation means in this case a higher energy consumption, but not that the cell wall perforating effect is lost. If necessary, a semi-conductive material may be used. Furthermore, a combination of material layers may also be used in the membrane 20.

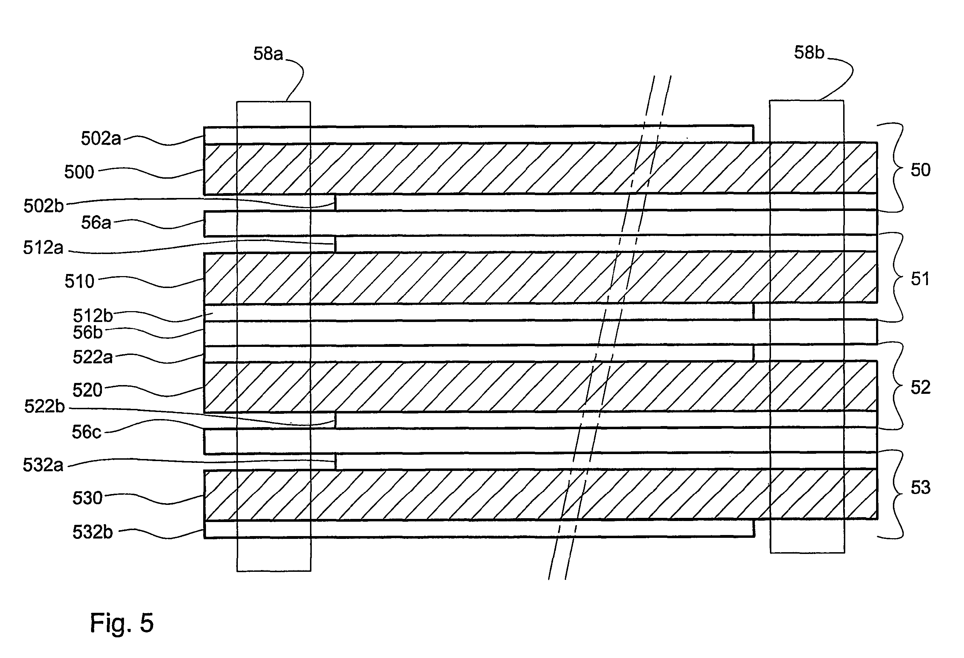

Figure 5 shows a packet of membrane elements 50, 51, 52, 53 of the type of Figure 2. Each membrane element 50, 51, 52, 53 comprises an insulating membrane 500, 510, 520, 530 and a pair of conductive layers 502a-b, 512a-b, 522a-b, 532a-b. The membrane elements 50, 51, 52, 53 are separated by insulating layers 56a-c. Connections 58a,b to the conductive layers 502a-b, 512a-b, 522a-b, 532a-b render it possible to apply voltage between pairs of layer 502a-b, 512a-b, 522a-b, 532a-b around each of the membranes 500, 510, 520, 530. A first and second electrode 55a,b of the voltage source 54 are connected to the layers 502a-b, 512a-b, 522a-b, 532a-b.

In one embodiment, the insulating layers 56a-c may be left out, on condition that the same potential is applied to directly successive conductive layers 502b-512a, 512b-522a, 522b-532a. In that case there may even be used an integrated layer packet in which between each pair of membranes there is only one conductive layer, which is connected with both membranes.

The packet is inserted as a membrane element 10a-e between a first and a second chamber 12a-e, 14a-e of the apparatus of Figure 2. Thus the fluid, when flowing through the packet, will be subjected a number of times to a high electric field in pores of successive membranes. Thus the fraction of the cells that remains unperforated can be limited in the fluid. In order to promote the flow, the pores may be arranged, if desired, after the membranes and the layers have been arranged on each other, so that the pores in different layers are automatically aligned with each other. This, however, is not necessary, certainly not if flow space is left between successive layers.

As shown, the voltages across the successive membranes 500, 510, 520, 530 are, in each case, applied with opposite polarity. Thus there will not arise any problems with fields between successive pairs of membranes 500, 510, 520, 530. Preferably, an even number of membranes is used. There is thus no potential difference between outer conductive layers 500a, 530b of the packet, with which the packet can enter into communication with its surroundings.

Although in Figure 5 the membranes and layers are separated, there may of course also be used a single flexible membrane, with associated layers, which is folded over itself a number of times or is wound around a tube with a number of windings, after which continuous pores are arranged.

Although the connections 58a,b are shown as pins that cut through the layers 502a-b, 512a-b, 522a-b, 532a-b, with which they make contact, in practice preferably one or more electrodes are contacted with the surface of the relevant layers, for instance by making a part of the different layers, seen in Figure 5 from the top to the bottom, accessible to the electrodes, or by folding the layers to the electrode.

## Claims

1. A method for treating a fluid, which comprises passing the fluid through pores in a membrane having surfaces connected by the pores, on which conductive layers are arranged, which are interrupted at the pores, said membrane containing a material that electrically insulates the conductive layers practically from each other, a voltage being applied in said method between the two layers.

2. A method according to claim 1, wherein the fluid contains microorganisms and wherein the voltage is at least so high that deactivation of a cell wall of the microorganisms occurs as a result of a field generated in the pores by the voltage.

3. A method according to claim 1, wherein the voltage is an alternating voltage.

4. A method according to claim 1, wherein the fluid is milk.

5. An apparatus for treating a fluid, provided with
- a first and a second fluid chamber;
- a membrane between the chambers, with pores in the membrane that admit fluid flow from the first to the second chamber, said membrane being provided with electrically conductive layers on surfaces of the membrane that are directed to respectively the first and the second chamber, said layers being interrupted at the pores, and said membrane containing a material that electrically insulates the layers practically from each other;
- connections for applying a voltage between the layers.

6. An apparatus according to claim 5, wherein a distance from a wall of the pores to any point inside the respective pore is not greater than a thickness of the membrane.

7. An apparatus according to claim 5, wherein the distance is smaller than 20 micrometers.

8. An apparatus according to claim 5, provided with an alternating voltage source coupled to the connections.

9. An apparatus according to claim 5, provided with a packet of at least two membranes, including the said membrane, each provided with pores so that a fluid flow is admitted through the pores of successive membranes of the packet from the first to the second chamber, with on each membrane further electrically conductive layers arranged respectively on surfaces in the direction of the first and the second chamber, with interruptions at the pores, each of said membranes containing a material that electrically insulates the layers on the respective membrane practically from each other, said connections being arranged to apply a voltage difference between the layers of each membrane.

10. An apparatus according to claim 5, provided with a
- sandwich of conductive layers and at least two membranes, including the said layers and the said membrane, in which sandwich the membranes and the conductive layers interchange, and in which each of the membranes contains pores and each of said conductive layers is interrupted at the pores so that the sandwich admits fluid flow through the pores of successive membranes from the first to the second chamber, each of said membranes containing a material that insulates the layers around the respective membrane practically from each other, and said connections being coupled to the layers of the sandwich to apply a voltage difference to each successive pair of layers in the sandwich.

11. A fluid filter, containing a membrane with pores between a first and a second surface of the membrane, and electrically conductive layers on respectively the first and the second surface, said layers being interrupted at the pores, and said membrane containing a material that electrically insulates the layers practically from each other.

12. A fluid filter according to claim 11, containing a sandwich of conductive layers and at least two membranes, including the said layers and the said membrane, in which sandwich the membranes and the conductive layers interchange, and in which each of said membranes contains pores and each of said conductive layers is interrupted at the pores so that the sandwich admits fluid flow through the pores of successive membranes, and each membrane containing a material that electrically insulates the layers around the respective membrane practically from each other.

## Patentansprüche

1. Verfahren zum Behandeln eines Fluids, bei dem das Fluid durch Poren in einer Membran geleitet wird, die durch die Poren verbundene Oberflächen hat, auf denen leitfähige Schichten angeordnet sind, die an den Poren unterbrochen sind, wobei die Membran ein Material enthält, das die leitfähigen Schichten praktisch gegeneinander isoliert, wobei bei dem Verfahren eine Spannung zwischen den Schichten angelegt wird.

2. Verfahren nach Anspruch 1, wobei das Fluid Mikroorganismen enthält und wobei die Spannung wenigstens so hoch ist, dass eine Zellwand der Mikroorganismen infolge eines in den Poren durch die Spannung erzeugten Feldes inaktiviert wird.

3. Verfahren nach Anspruch 1, wobei die Spannung eine Wechselspannung ist.

4. Verfahren nach Anspruch 1, wobei das Fluid Milch ist.

5. Vorrichtung zum Behandeln eines Fluids, mit:
- Einer ersten und einer zweiten Fluidkammer,
- einer Membran zwischen den Kammern, mit Poren in der Membran, die Fluidfluss von der ersten in die zweite Kammer ermöglichen, wobei die Membran mit elektrisch leitfähigen Schichten an den Oberflächen der Membran versehen ist, die der ersten beziehungsweise zweiten Kammer zugewandt sind, wobei die Schichten an den Poren unterbrochen sind und die Membran ein Material enthält, das die Schichten praktisch gegeneinander isoliert,
- Anschlüssen zum Anlegen einer Spannung zwischen den Schichten.

6. Vorrichtung nach Anspruch 5, wobei ein Abstand von einer Wand der Poren zu irgendeinem Punkt innerhalb der jeweiligen Pore nicht größer als die Dicke der Membran ist.

7. Vorrichtung nach Anspruch 5, wobei der Abstand kleiner als 20 µm ist.

8. Vorrichtung nach Anspruch 5, die mit einer an den Anschlüssen anzuschließenden Wechselspannungsquelle versehen ist.

9. Vorrichtung nach Anspruch 5, die mit einem Paket von wenigstens zwei Membranen versehen ist, einschließlich der Membran, wobei jede Membran mit Poren versehen ist, so dass Fluid durch die Poren der aufeinander folgenden Membranen des Paketes von der ersten in die zweite Kammer fließen kann, wobei auf jeder Membran ferner elektrisch leitfähige Schichten jeweils auf den in der Richtung der ersten und der zweiten Kammer gerichteten Oberflächen mit Unterbrechungen an den Poren angeordnet sind, wobei die Membranen ein Material enthalten, das die Schichten auf den jeweiligen Membranen praktisch gegeneinander isoliert, wobei die Anschlüsse dazu ausgelegt sind, um eine Spannungsdifferenz zwischen den Schichten jeder Membran anzulegen.

10. Vorrichtung nach Anspruch 5, die versehen ist mit
- einer Schichtfolge von leitfähigen Schichten und wenigstens zwei Membranen, einschließlich der Schichten und der Membran, wobei sich in der Schichtfolge die Membranen und die leitfähigen Schichten abwechseln und wobei jede der Membranen Poren enthält und die leitfähige Schichten bei den Poren unterbrochen sind, so dass die Schichtfolge einen Fluidfluss durch die Poren der aufeinander folgenden Membranen von der ersten in die zweite Kammer ermöglicht, wobei jede der Membranen ein Material enthält, das die Schichten um die jeweilige Membran praktisch gegeneinander isoliert, und wobei die Anschlüsse an die Schichten der Schichtfolge angeschlossen sind, um eine Spannungsdifferenz an jedes aufeinander folgende Paar von Schichten in der Schichtfolge anzulegen.

11. Fluidfilter, der eine Membran mit Poren zwischen einer ersten und einer zweiten Oberfläche der Membran und elektrisch leitfähige Schichten jeweils auf der ersten und der zweiten Oberfläche enthält, wobei die Schichten bei den Poren unterbrochen sind und wobei die Membran ein Material enthält, das die Schichten praktisch gegeneinander isoliert.

12. Fluidfilter nach Anspruch 11, der eine Schichtfolge von leitfähige Schichten und wenigstens zwei Membranen enthält, einschließlich der Schichten und der Membran, wobei in der Schichtfolge die Membranen und die leitfähigen Schichten abwechseln und wobei jede der Membranen Poren enthält und jede leitfähige Schicht bei den Poren unterbrochen ist, so dass die Schichtfolge Fluiddurchfluss durch die Poren der aufeinanderfolgenden Membranen ermöglicht, und wobei jede Membran ein Material enthält, das die Schichten um die jeweilige Membran praktisch gegeneinander isoliert.

## Revendications

1. Procédé pour traiter un fluide, qui comporte le passage du fluide à travers des pores d'une membrane ayant des surfaces reliées par les pores, sur laquelle des couches conductrices sont agencées, qui sont interrompues au niveau des pores, ladite membrane contenant un matériau qui pratiquement isole électriquement les couches conductrices les unes des autres, une tension étant appliquée lors dudit procédé entre les deux couches.

2. Procédé selon la revendication 1, dans lequel le fluide contient des micro-organismes et dans lequel la tension est au moins si élevée qu'une désactivation d'une paroi cellulaire des micro-organismes apparaît en résultat d'un champ généré dans les pores par la tension.

3. Procédé selon la revendication 1, dans lequel la tension est une tension alternative.

4. Procédé selon la revendication 1, dans lequel le fluide est du lait.

5. Appareil pour traiter un fluide, muni de
- une première et une seconde chambre de fluide,
- une membrane entre les chambres, avec des pores dans la membrane qui admettent un écoulement fluidique de la première vers la seconde chambre, ladite membrane étant munie de couches électriquement conductrices sur des surfaces de la membrane qui sont dirigées respectivement vers la première et la seconde chambre, lesdites couches étant interrompues au niveau des pores, et ladite membrane contenant un matériau qui pratiquement isole électriquement les couches les unes des autres,
- des connexions pour appliquer une tension entre les couches.

6. Appareil selon la revendication 5, dans lequel une distance d'une paroi des pores vers un quelconque point à l'intérieur du pore respectif n'est pas supérieure à une épaisseur de la membrane.

7. Appareil selon la revendication 5, dans lequel la distance est inférieure à 20 micromètres.

8. Appareil selon la revendication 5, muni d'une source de tension alternative couplée aux connexions.

9. Appareil selon la revendication 5, muni d'un paquet d'au moins deux membranes, incluant ladite membrane, chacune munie de pores de sorte qu'un écoulement fluidique est admis à travers les pores des membranes successives du paquet de la première vers la seconde chambre, avec sur chaque membrane des couches électriquement conductrices supplémentaires agencées respectivement sur des surfaces en direction de la première et de la seconde chambre, avec des interruptions au niveau des pores, chacune desdites membranes contenant un matériau qui pratiquement isole électriquement les couches sur la membrane respective les unes des autres, lesdites connexions étant conçues pour appliquer une différence de tension entre les couches de chaque membrane.

10. Appareil selon la revendication 5, muni de
- un sandwich de couches conductrices et d'au moins deux membranes, incluant lesdites couches et ladite membrane, dans lequel sandwich, les membranes et les couches conductrices s'échangent mutuellement, et dans lequel chacune des membranes contient des pores et chacune desdites couches conductrices est interrompue au niveau des pores de sorte que le sandwich admet un écoulement fluidique à travers des pores de membranes successives de la première vers la seconde chambre, chacune desdites membranes contenant un matériau qui pratiquement isole les couches autour de la membrane les unes des autres, et lesdites connexions étant couplées aux couches du sandwich pour appliquer une différence de tension à chaque paire successive de couches du sandwich.

11. Filtre pour fluide, contenant une membrane ayant des pores entre une première et une seconde surface de la membrane, et des couches électriquement conductrices respectivement sur la première et la seconde surface, lesdites couches étant interrompues au niveau des pores, et ladite membrane contenant un matériau qui pratiquement isole électriquement les couches les unes des autres.

12. Filtre pour fluide selon la revendication 11, contenant un sandwich de couches conductrices et au moins deux membranes, incluant lesdites couches et ladite membrane, dans lequel sandwich les membranes et les couches conductrices s'échangent mutuellement, et dans lequel chacune desdites membranes contient des pores et chacune desdites couches conductrices est interrompue au niveau des pores de sorte que le sandwich admet un écoulement fluidique à travers les pores de membranes successives, et chaque membrane contenant un matériau qui pratiquement isole électriquement les couches autour de la membrane respective les unes des autres.
